# EUROPÄISCHE PATENTANMELDUNG

(11) **EP 0 791 287 A2**
(43) Veröffentlichungstag der Anmeldung: **27.08.1997**
(21) Anmeldenummer: 97102406.2
(22) Anmeldetag: 14.02.1997
(51) Int. Cl.: A01D 33/10, A01D 51/00

(54) **Vorrichtung zum Aufnehmen von Wurzelfrüchten mit mindestens einem Fördermittel**

(30) Priorität: 22.02.1996 DE 19606601
(71) Anmelder: Franz Kleine Maschinenfabrik GmbH & Co., D-33154 Salzkotten (DE)
(72) Erfinder: Speth, Andreas, 85114 Buxheim (DE)
(74) Vertreter: Patentanwälte Rehberg + Hüppe

(57) **Zusammenfassung**

Eine Vorrichtung zum Aufnehmen und Fördern von Wurzelfrüchten (8) weist einen verfahrbaren Grundrahmen (9) und mindestens ein Fördermittel (1) auf, das die aufgenommenen Wurzelfrüchte (8) aufliegend fördert. Das Fördermittel (1) weist einen Hilfsrahmen (5) auf, der sich über eine oder mehrere Kraftmeßzelle(n) (10) an dem Grundrahmen (9) abstützt. Ein Wegaufnehmer (14) registriert den Förderweg des Fördermittels (1), und eine Auswerteeinrichtung (11) bestimmt aus Ausgangssignalen (12 und 13) der Kraftmeßzelle(n) (10) und des Wegaufnehmers (14) den Durchsatz an den aufgenommenen Wurzelfrüchten (8).

## Beschreibung

Die Erfindung bezieht sich auf eine Vorrichtung zum Aufnehmen und Fördern von Wurzelfrüchten mit einem verfahrbaren Grundrahmen und mit mindestens einem Fördermittel, das die aufgenommenen Wurzelfrüchte aufliegend fördert. Dies schließt beispielsweise Ladevorrichtungen, die Wurzelfrüchte aus Mieten aufnehmen, auf Lastkraftwagen aufladen und dabei reinigen, und Rodevorrichtungen, die aus dem Boden aufnehmen und anschließend in einem Bunker zwischenlagern oder direkt auf einen parallel fahrenden Lastkraftwagen aufladen, ein. Bei allen Vorrichtungen der eingangs beschriebenen Art werden die Wurzelfrüchte aufgenommen und vorzugsweise unter Reinigungswirkung mit mindestens einem Fördermittel auf dem Fördermittel aufliegend gefördert. Bei dem Fördermittel kann es sich um ein Siebband, ein Kettenband, einen Siebstern, einen Elevator, einen Schneckenförderer oder dergleichen handeln.

Insbesondere bezieht sich die Erfindung auf Vorrichtungen der eingangs beschriebenen Art zum Aufnehmen und Fördern von Zuckerrüben.

Eine Vorrichtung der eingangs beschriebenen Art ist aus der DE-C2-32 17 889 bekannt. Hierbei handelt es sich um ein selbstfahrendes Lade- und Reinigungsgerät für Zuckerrüben, mit dem die zu einer Miete aufgehäuften Zückerrüben vom Boden aufgenommen, auf einen Lastkraftwagen aufgeladen und dabei mit Hilfe von Kettenförderern und Siebbändern gereinigt werden. Als Fördermittel sind mehrere hintereinander angeordnete Siebbänder vorgesehen, von denen sämtliche aufgenommenen Zuckerrüben aufliegend gefördert werden. Bei der Verwendung des Lade- und Reinigungsgeräts fällt die an den Zuckerrüben anhaftende Erde weitgehend nach unten durch die Siebbänder ab. Dies ist mit großen Vorteilen bei der Weiterverarbeitung der Zuckerrüben in einer Zuckerfabrik verbunden. Der genannte Vorteil wird jedoch nur dann vollständig erhalten, wenn der Durchsatz der Zuckerrüben durch das Lade- und Reinigungsgerät nicht zu groß ist. Anderenfalls hindern sich die Zuckerrüben gegenseitig an der Reinigung. Die Unterschiede zwischen einem zu einer guten Reinigung der Zuckerrüben führenden begrenzten Durchsatz und einem darüberhinaus gehenden zu großen Durchsatz an Zuckerrüben sind erheblich bezüglich des Verschmutzungsgrads der in der Zuckerfabrik ankommenden Zuckerrüben. Ein weiteres Problem beim Einsatz des bekannten Lade- und Reinigungsgeräts ist die Gefahren der Überladung von Lastkraftwagen. Es passiert leicht, daß zuviele Zuckerrüben auf einen einzelnen Lastkraftwagen aufgeladen werden und dieser sein zulässiges Gesamtgewicht überschreitet. Die tatsächliche Beladung eines Lastkraftwagens ist insbesondere bei stark schwankendem, nassem Erdanteil optisch kaum zu ermitteln und auf dem Feld stehen in der Regel keine geeigneten Waagen zur Bestimmung der Beladung zur Verfügung. Derartige Waagen fehlen auch, wenn ein Lastkraftwagen am Ende einer Miete nur teilweise beladen ist und er durch Zuckerrüben aus einer anderen Miete eines anderen Eigentümers aufgefüllt werden soll, bevor er zur Zuckerfabrik fährt. In diesem Fall muß bislang die Beladung des Lastkraftwagens mit Zuckerrüben aus der ersten Miete geschätzt werden und der Eigentümer der ersten Miete wird von der Zuckerfabrik nach dieser Schätzung vergütet, obwohl die Schätzung mit großen Ungenauigkeiten verbunden ist.

Eine Vorrichtung der Eingangs beschriebenen Art ist auch aus der DE-C2-39 35 386 bekannt. Hierbei handelt es sich um eine Erntemaschine für Zuckerrüben mit einer die Wurzelfrüchte rodenden und reinigenden Einrichtung, von der die Wurzelfrüchte über einen Umlaufelevator in einen Bunker gelangen.

Das satellitengestützte "Global Position System (GPS)" würde es grundsätzlich ermöglichen, die absolute Position einer Erntemaschine zu jedem Zeitpunkt festzustellen. Zur ertragsoptimierten Festlegung der Einsatzmengen von Saatgut, Dünger und Pflanzenschutzmitteln wäre es interessant, den tatsächlich erzielten Ertrag an Wurzelfrüchten lokal zu bestimmen.

Aus der Zementindustrie ist ein Förderband bekannt, bei dem eine einzelne Tragrolle, die das umlaufende und den Zement auf seiner außenliegenden Oberfläche aufliegend fördernde Förderband an einer Stelle abstützt, als Meßrolle ausgebildet ist. D. h., die Meßrolle registriert die zusätzliche Kraft, die durch das Gewicht des auf dein Förderband aufliegenden Zements auftritt. Aus dieser Kraft kann unter Berücksichtigung des Förderwegs des Förderbands die von dem Förderband geförderte Zementmenge bestimmt werden.

Der Erfindung liegt die Aufgabe zugrunde, eine Vorrichtung der Eingangs beschriebenen Art aufzuzeigen, bei der der Durchsatz der aufgenommenen und geförderten Wurzelfrüchte mit einer Genauigkeit von mindestens +/- 10 % bestimmbar ist.

Erfindungsgemäß wird diese Aufgabe dadurch gelöst, daß das Fördermittel einen Hilfsrahmen aufweist, der sich über eine oder mehrere Kraftmeßzelle(n) an dem Grundrahmen abstützt, daß ein Wegaufnehmer den Förderweg des Fördermittels registriert und daß eine Auswerteeinrichtung aus Ausgangssignalen der Kraftmeßzelle(n) und des Wegaufnehmers den Durchsatz an den aufgenommenen Wurzelfrüchten bestimmt.

Im Gegensatz zu dem bekannten Förderband aus dem Bereich der Zementindustrie ist nicht ein einzelnes Element des Fördermittels über Kraftmeßzellen abgestützt, sondern das Fördermittel stützt sich über seinen Hilfsrahmen als ganzes über eine oder mehrere Kraftmeßzelle(n) an dem Grundrahmen ab. Im Falle eines Förderbands trägt der Hilfsrahmen beispielsweise die Lagerungen für sämtliche Stützrollen des Förderbands und in der Regel auch den Antrieb. Die Kraftmeßzelle(n) registrieren mit dem Gewicht des Föredermittels das gesamte Gewicht der auf dem Fördermittel aufliegenden Wurzelfrüchte unabhängig beispielsweise von einer veränderten Spannung eines als Fördermittel verwendeten Förderbands oder dergleichen. Der Wegaufnehmer registriert den Förderweg des Fördermittels, d. h., die Strecke, um die sich ein bestimmter Oberflächenpunkt des Fördermittels fortbewegt. Die Auswerteeinrichtung bestimmt aus den Ausgangssignalen der Kraftmeßzelle(n) und des Wegaufnehmers den Durchsatz an den aufgenommenen Wurzelfrüchten. Neben den beiden Eingangssignalen hat die Auswerteeinrichtung bei der Bestimmung des Durchsatzes einen Proportionalitätsfaktor zu berücksichtigen, in den beispielsweise die Förderlänge des Fördermittels, ein eventueller Rücklauf von Wurzelfrüchten, ein Abschlag für das scheinbar größere Gewicht von auf das Fördermittel herabfallenden Wurzelfrüchten und dergleichen eingehen. Mit einem empirisch ermittelten Proportionalitätsfaktor ist es problemlos möglich, den Durchsatz an den aufgenommenen Wurzelfrüchten deutlich genauer als auf +/- 10 % zu bestimmen. Damit ist eine Durchsatzkontrolle zur ausreichenden Reinigung der Wurzelfrüchte beim Aufladen auf einen Lastkraftwagen, eine Beladungskontrolle zur Einhaltung des zulässigen Gesamtgewichts eines beladenen Lastkraftwagens bzw. eine lokale Ertragserfassung beim Roden von Wurzelfrüchten möglich.

Für das Fördermittel bzw. seinen Hilfsrahmen kann eine Führung an dem Grundrahmen vorgesehen sein, die horizontal wirkende Kräfte aufnimmt, wobei die Meßrichtung der Kraftmeßzelle(n) vertikal ausgerichtet ist. Da die Kraftmeßzelle(n) dazu vorgesehen sind, die Gewichtskraft der auf dem Fördermittel aufliegenden Wurzelfrüchte zu registrieren, ist es grundsätzlich sinnvoll, die Meßrichtung der Kraftmeßzelle(n) vertikal auszurichten, d. h. parallel zu der interessierenden Gewichtskraft. Um horizontal wirkende Kräfte von den Kraftmeßzelle(n) fernzuhalten, ist gleichzeitig die vertikale Führung des Fördermittels an dem Grundrahmen vorteilhaft. Bei der Führung kann es sich um Schienen, Parallelogrammlenker oder dergleichen handeln. In jedem Fall ist zu berücksichtigen, daß handelsübliche Kraftmeßzelle(n) nur sehr geringe Meßwege auch bei großen zu registrierenden Kräften aufweisen. Hieraus resultiert, daß eine horizontale Verschiebung durch eine vertikale Parallelogrammführung ohne Belang ist. Jede Führung muß aber extrem spielfrei ausgebildet sein, damit die auftretenden Toleranzen nicht bereits in die Größenordnung des Meßwegs der Kraftmeßzelle(n) kommen.

Alternativ zu einer vertikalen Führung des Fördermittels an dem Grundrahmen kann das Fördermittel bzw. sein Hilfsrahmen an dem Grundrahmen um eine horizontale Achse schwenkbar gelagert sein und sich mit seinem freien Ende über die Kraftmeßzelle(n) an dem Grundrahmen abstützen. Bei dieser Anordnung ist nicht unbedingt eine vertikale sonder eine relativ zu der Schwenkachse tangentiale Orientierung der Kraftmeßzelle(n) sinnvoll. Die Kraftmeßzelle(n) registrieren die Gewichtskraft der einzelnen Wurzelfrüchte auf dem Fördermittel nicht gleichgewichtet sondern in Abhängigkeit von dem jeweils um die Schwenkachse des Fördermittels wirkenden Hebel. Dieser Hebeleinfluß mittelt sich jedoch heraus, da sämtliche Wurzelfrüchte beim Fördern mit dem Fördermittel durch den Bereich sämtlicher auftretenden Hebel gelangen. Die Schwenklagerung des Fördermittels hat sogar den Vorteil, daß im Bereich der Schwenkachse Wurzelfrüchte auf das Fördermittel herabfallen können, ohne daß der Aufprallimpuls der Wurzelfrüchte wie ein scheinbares zusätzliches Gewicht von den Kraftmeßzelle(n) registriert wird.

Wenn die Kraftmeßzelle(n) einen oder mehrere Biegebalken aufweisen, über die sich der Hilfsrahmen an dem Grundrahmen abstützt, geht die Gewichtskraft der einzelnen Wurzelfrüchte auf dem Fördermittel ebenfalls nicht gleichgewichtet in die gesamte von der/den Kraftmeßselle(n) registrierte Kraft ein. Aber auch hier erfolgt eine Mittelung über den Förderweg des Fördermittels und kann die Anordnung des Aufgabepunkts der Wurzelfrüchte auf das Fördermittel relativ zu der/den Kraftmeßzelle(n) so gewählt werden, daß der Aufprallimpuls der Wurzelfrüchte nicht wie ein scheinbares zusätzliches Gewicht registriert wird.

Bei einer Kraftmeßzelle mit einem Biegebalken wird die Verbiegung des Biegebalkens vorzugsweise mit einem Dehnmeßstreifen registriert. Dieser Aufbau einer Kraftmeßzelle ist aber an sich ebenso bekannt wie beispielsweise Druckmeßbolzen oder Kraftmeßbolzen die ebenfalls als Kraftmeßzellen zur anwendung kommen können. Dasselbe gilt im Prinzip für den bei der Erfindung zur Anwendung kommenden Wegaufnehmer, der in Form an sich bekannter Wegsensoren, Drehwinkelgeber oder dergleichen verwirklicht werden kann.

Das Fördermittel kann ein Förderband, insbesondere ein Siebband, ein Elevator, ein Schnecken(steil)förderer oder ein Siebstern sein. Alle bekannten Fördermittel für Wurzelfrüchte sind zur erfindungsgemäßen Abstützung über Kraftmeßzelle(n) an dem Grundrahmen der Vorrichtung geeignet.

Bevorzugt sind jedoch solche Fördermittel, die am Ende einer Reinigungsstrecke in der Vorrichtung angeordnet sind. Hier sind die Fehler beim Bestimmen des Durchsatzes an Wurzelfrüchten durch anhaftende Erde am geringsten.

Weiterhin ist es von Vorteil, wenn das Fördermittel mit Abstand über einer Aufstandfläche des Grundrahmens angeordnet ist, wobei dieser Abstand möglichst groß ist. Nahe der Aufstandfläche besteht die Gefahr, daß das Fördermittel an Hindernisse anstößt oder sonstwie Kräfte auf das Fördermittel einwirken, die nicht mit der Gewichtskraft der aufliegend geförderten Wurzelfrüchte zusammenhängen. Weiter oberhalb der Aufstandfläche ist diese Gefahr deutlich reduziert.

Die Auswerteeinrichtung für die Signale der Kraftmeßzelle(n) und des Wegaufnehmers ist vorzugsweise kalibrierbar. Hiermit ist nicht die Festlegung eines festen Proportionalitätsfaktors gemeint. Vielmehr soll dieser Proportionalitätsfaktor veränderbar sein, um beispielsweise zwischenzeitlich gewonnene Informationen über das tatsächliche Gewicht einer LKW-Ladung zu berücksichtigen. Bei einer derartigen Feinkalibrierung der Auswerteeinrichtung kann der Durchsatz an Wurzelfrüchten innerhalb einer Miete beispielsweise auf etwa 1 % genau bestimmt werden.

Mit der Auswerteeinrichtung ist der Durchsatz an Wurzelfrüchten durch eine Lade- und Reinigungseinrichtung nicht nur kontrollierbar, um im nachhinein festzustellen, ob ein bestimmter Höchstdurchsatz eingehalten wurde. Vielmehr kann die Auswerteeinrichtung direkt zur Begrenzung des Durchsatzes auf den Maximalwert vorgesehen sein. Hierzu kann die Auswerteeinrichtung beispielsweise auf die Geschwindigkeit beim Verfahren der gesamten Vorrichtung einwirken.

Bei der kontinuierlichen Ertragserfassung beim Ernten ist es vorteilhaft, wenn die Auswerteeinrichtung dem aktuellen Durchsatz an Wurzelfrüchten die aktuelle Position der Vorrichtung zuordnet. Die Bestimmung der aktuellen Position der Vorrichtung kann mit einem bekannten GPS-Empfänger erfolgen.

Die Erfindung wird im folgenden anhand von Ausführungsbeispielen näher erläutert und beschrieben. Dabei zeigt
- Figur 1: ein Fördermittel einer Vorrichtung zum Aufnehmen und Fördern von Wurzelfrüchten in einer ersten Ausführungsform,
- Figur 2: die gesamte Vorrichtung mit dem Fördermittel gemäß Figur 1,
- Figur 3: das Fördermittel einer Vorrichtung zum Aufnehmen und Fördern von Wurzelfrüchten in einer zweiten Ausführungsform,
- Figur 4: eine Vorrichtung zum Aufnehmen und Fördern von Wurzelfrüchten mit einem Fördermittel in einer dritten Ausführungsform,
- Figuren 5+6: Details zu Führungen für die Fördermittel gemäß den Figuren 1 bis 4 und
- Figur 7: eine Vorrichtung zum Aufnehmen und Fördern von Wurzelfrüchten mit einem Fördermittel in einer weiteren Ausführungsform.

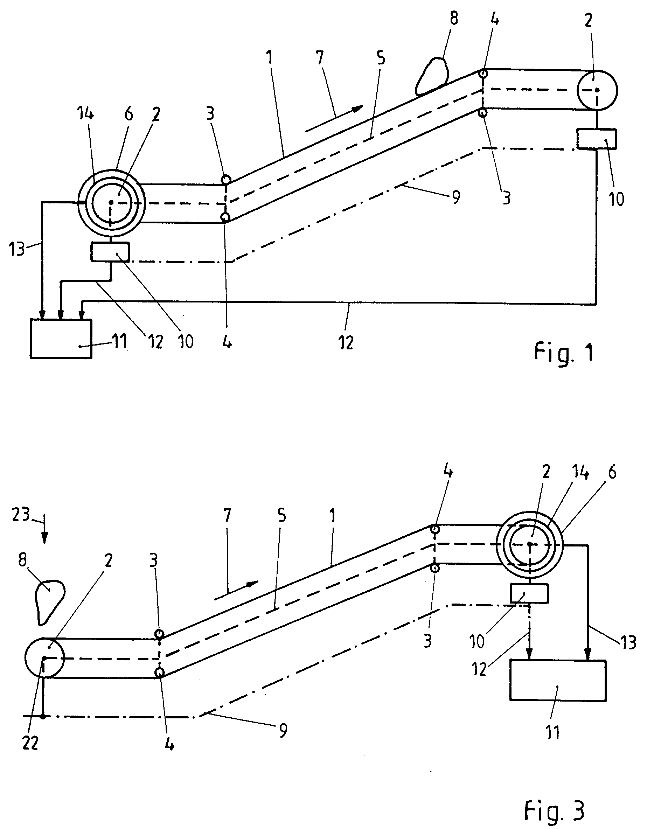

Das in Figur 1 dargestellte Fördermittel ist ein als Siebband ausgebildetes Förderband 1. Das Förderband 1 wird von Rollen 2 bis 4 geführt, wobei nur die das Förderband umlenkenden aber nicht zusätzlich vorhandene, das Förderband nur abstützende Rollen zeichnerisch dargestellt sind. Die Rollen 2 bis 4 sind an einem durch eine gestrichelte Linie angedeuteten Hilfsrahmen 5 des Förderbands 1 gelagert. Das Förderband 1 wird von einem Antrieb 6 in Richtung eines Pfeils 7 umlaufend angetrieben. Dabei fördert es auf seiner Oberseite aufliegende Wurzelfrüchte, für die stellvertretend eine Zuckerrübe 8 dargestellt ist, in Richtung des Pfeils 7. An dem Grundrahmen 9 einer nicht weiter dargestellten Vorrichtung zum Aufnehmen und Fördern von Wurzelfrüchten stützt sich der Hilfsrahmen 5 des Förderbands 1 über Kraftmeßzellen 10 ab. Der Grundrahmen 9 ist in Figur 1 nur durch eine strichpunktierte Linie angedeutet. Eine Auswerteeinrichtung 11 ist für die Ausgangssignale 12 der Kraftmeßzelle(n) vorgesehen, um den Durchsatz der von dem Förderband 1 geförderten Wurzeifrüchte zu bestimmen. Hierzu berücksichtigt die Auswerteeinrichtung 11 auch das Ausgangssignal 13 eines Wegaufnehmers 14, der an dem Antrieb 6 den zurückgelegten Förderweg des Förderbands 1 ermittelt.

Die Bestimmung des Durchsatzes an Wurzelfrüchten durch die Auswerteeinrichtung 11 ist möglich, weil die Kraftmeßzellen 10 neben der Gewichtskraft des Förderbands 1 mit den Rollen 2 bis 4 und dem Hilfsrahmen 5 auch das Gewicht der auf dem Förderband 1 aufliegenden Wurzelfrüchte registrieren. Aus dem Ausgangssignal 13 des Wegaufnehmers 14 ist ermittelbar, wie oft die auf dem Förderband 1 aufliegende Menge an Wurzelfrüchten gefördert wird. Hierzu ist beispielsweise der registrierte Förderweg durch die aktive Länge des Förderbands 1 zu teilen. Die so erhaltene Zahl muß nur mit der von den Kraftmeßzelle(n) 10 registrierten Masse der auf dem Förderband 1 aufliegenden Wurzelfrüchte multipliziert werden, um den gewünschten Durchsatz an Wurzelfrüchten zu erhalten. Allerdings kann es schwierig sein, die aktive Länge des Förderbands theoretisch zu bestimmen, außerdem können die Kraftmeßzelle(n) scheinbar zu große Gewichtskräfte registrieren, wenn Wurzelfrüchte auf das Förderband 1 auffallen. Es bietet sich daher an, den zurückgelegten Förderweg des Förderbands 1 nicht durch eine theoretisch bestimmte aktive Länge zu teilen, sondern mit einem empirisch ermittelten Proportionalitätsfaktor zu multiplizieren und dieses Ergebnis wiederum mit dem von den Kraftmeßzellen 10 registrierten Gewicht der auf dem Förderband 1 aufliegenden Wurzelfrüchte zu multiplizieren.

Normalerweise werden die Ausgangssignale 12 der Kraftmeßzelle(n) 10 nicht konstant sein. Daher ist in der Auswerteeinheit 11 eine Mittelung vorzunehmen. Vorzugsweise erfolgt diese Mittelung nicht unabhängig von dem Ausgangssignal 13 des Wegaufnehmers 14. Vielmehr wird sinnvollerweise erst das mit dem jeweils zugehörigen Förderweg multiplizierte Gewicht der Wurzelfrüchte gemittelt. Auf diese Weise werden bei der Mittelung auch Einflüsse der Fördergeschwindigkeit auf das Gewicht der auf dem Förderband 1 befindlichen Wurzelfrüchte berücksichtigt.

Es versteht sich, daß mit der Anordnung gemäß Figur 1 nicht nur ein absoluter Durchsatz an mit dem Förderband 1 geförderten Wurzelfrüchten, d. h. das Gewicht der insgesamt geförderten Wurzelfrüchte, bestimmbar ist, sondern daß auch ein zeitbezogener Durchsatz, d. h. das Gewicht der pro Zeiteinheit geförderten Wurzelfrüchte, bestimmbar ist.

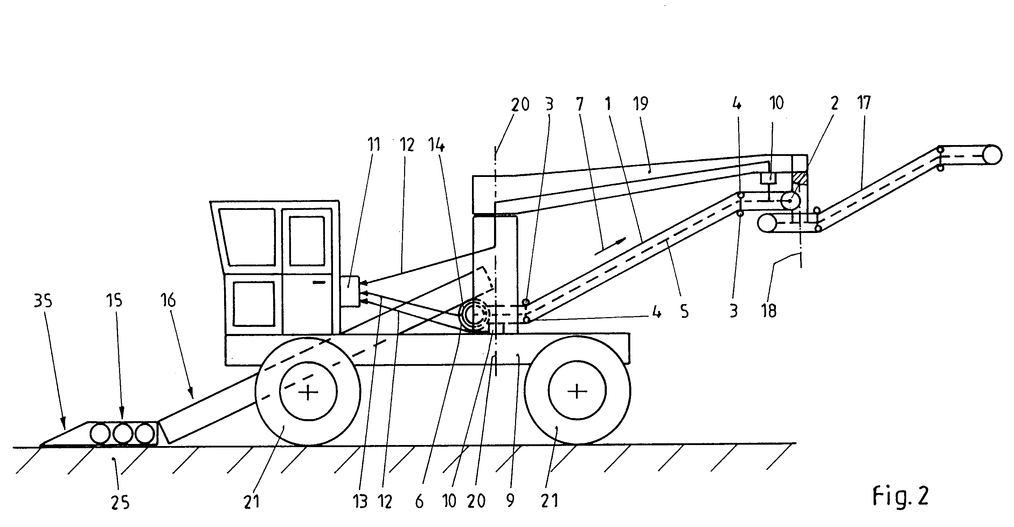

Die in Figur 2 dargestellte Vorrichtung dient zum Aufnehmen von Zuckerrüben, die sich beispielsweise in einer auf dem Boden liegenden Miete befinden. Die Vorrichtung lädt die Zuckerrüben auf einen hier nicht dargestellten Lastkraftwagen, wobei sie mit verschiedenen Fördermitteln 1, 15, 16 und 17 gefördert und während des Förderns gereinigt werden. Bei dem ersten Fördermittel handelt es sich um quer zur Fahrt und Arbeitsrichtung der Vorrichtung angeordnete Querförderschnecken 15, mit denen die breit von einer Aufnahmeeinrichtung 18 aufgenommenen Zuckerrüben zu dem zentral angeordneten Fördermittel 16 zusammengeführt werden. Bei diesem Fördermittel handelt sich um längs zur Fahrt- und Arbeitsrichtung der Vorrichtung angeordnete Längsförderschnecken 16. Im Anschluß an die Längsförderschnecken 16 ist das Förderband 1 gemäß Figur 1 vorgesehen. Hieran schließt sich noch ein weiteres Förderband 17 an. Um die Zuckerrüben auf einen Lastkraftwagen aufladen zu können, der sich in unterschiedlichen Relativpositionen zu der Vorrichtung gemäß Figur 2 befindet, ist das Förderband 17 um eine Achse 18 verschwenkbar an einem Tragarm 19 gelagert. Der Tragarm 19 ist seinerseits um eine Achse 20 verschwenkbar gegenüber dem Fahrwerk 21 der Vorrichtung. Das Förderband 1 ist zwar frei schwenkbar um die Achse 20 gegenüber dem Fahrwerk 21 der Vorrichtung gelagert, aber über eine hier nicht dargestellte Kulissenführung mit dem Förderband 17 verbunden, so daß das Förderband 1 außerhalb einer Transportposition für die Förderbänder 1 und 17 immer oberhalb des Förderbands 17 endet. So fallen unabhängig von der Schwenkposition des Förderbands 17 um die Achse 18 und die Achse 20 keine Zuckerrüben zwischen den Förderbändern 1 und 17 herunter. Im Bereich der Achse 20 und des äußeren Endes des Tragarms 19 stützt sich der Hilfsrahmen 5 des Förderbands 1 über die Kraftmeßzellen 10 an dem Grundrahmen 9 der Vorrichtung gemäß Figur 2 ab, wobei auch der Tragarm 19 als Bestandteil des Grundrahmens 9 anzusehen ist. Die bereits auf das Förderband 1 gelangten Zuckerrüben sind Im Bereich der Querförderschnecken 15 und der Längsförderschnecken 16 vorgereinigt, so daß der mit der Auswerteeinrichtung 11 bestimmte Durchsatz an Zuckerrüben über das Förderband 1 keinen nennenswerten Fehler mehr durch Verschmutzungen der Zuckerrüben aufweist. Besonders vorteilhaft ist es, die Auswerteeinrichtung 11 aufgrund eines beispielsweise in einer Zuckerfabrik en block gewogenen Zuckerrübendurchsatzes zu kalibrieren. Hiernach sind im Bereich derselben Miete Fehler im Bereich von nur 1 % bei der Bestimmung des Durchsatzes an Zuckerrüben mit der Auswerteeinrichtung 11 erreichbar.

Da bekanntlicherweise ein Zusammenhang zwischen der Reinigungswirkung der Vorrichtung gemäß Figur 2 und dem zeitbezogenen Durchsatz an Zuckerrüben besteht, wobei die Überschreitung eines gewissen Durchsatzes zu einer mangelhaften Reinigung der Zuckerrüben führt, kann die Auswerteeinrichtung 11 auch dazu dienen, den Fahrer der Vorrichtung gemäß Figur 2 bei der Einhaltung dieses maximalen Durchsatzes zu kontrollieren. Beispielsweise kann die Auswerteeinrichtung 11 ein Arbeitsprotokoll ausgeben. Darüberhinaus ist es möglich, wenn die Auswerteeinrichtung 11 direkt auf den Antrieb der Vorrichtung gemäß Figur 2 einwirkt, den tatsächlichen Durchsatz auf den maximal zulässigen Durchsatz zu begrenzen. Alternativ kann die Auswerteeinrichtung 11 auch ein Schott in den Förderweg der Rüben absenken, um die Einhaltung des maximal zulässigen Durchsatzes zu erzwingen.

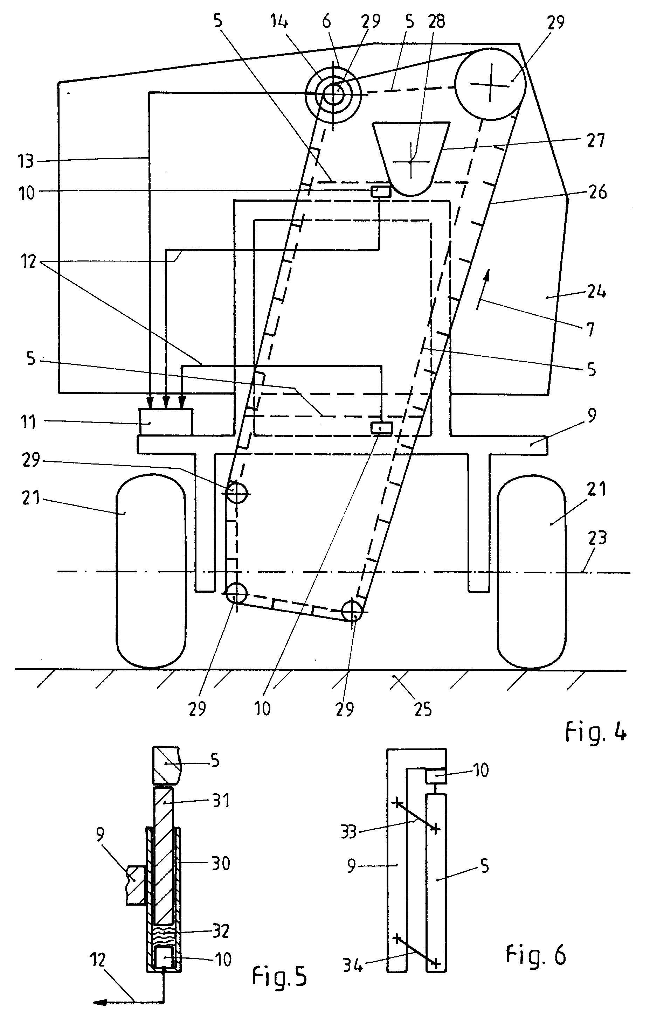

Figur 3 zeigt eine Ausführungsform des Förderbands 1 gemäß den Figuren 1 und 2, bei der der Hilfsrahmen 5 des Förderbands 1 einseitig um eine ortsfeste Schwenkachse 22 an dem Grundrahmen 9 gelagert ist. An dem anderen Ende stützt sich der Hilfsrahmen 5 über die Kraftmeßzelle 10 an dem Grundrahmen 9 ab. Bei dieser Anordnung macht sich der Impuls der über der Achse 22 in Richtung des Pfeils 23 auf das Förderband 1 fallenden Zuckerrübe 8 nicht in Form eines scheinbar höheren Gewichts der auf dem Förderband 1 aufliegenden Wurzelfrüchte bemerkbar. Zwar bestimmt die Kraftmeßzelle 10 nicht direkt das Gewicht der auf dem Förderband 1 aufliegenden Wurzelfrüchte, weil noch jeweils der Hebel bezogen auf die Achse 22 zu berücksichtigen ist, doch spielt dies im Mittel auch bei ungleichmäßiger Beladung des Förderbands 1 keine Rolle.

Figur 4 zeigt die Rückansicht eines Rübenroders. Zu erkennen sind die Hinterachse 23 des Fahrwerks 21 des Rübenroders und sein Grundrahmen 9, an dem ein Bunker 24 für die gerodeten Zuckerrüben gelagert ist. Die Zuckerrüben werden nach dem Aufnehmen aus bzw. von dem Boden 25 unter den Bunker 24 hindurch nach hinten gefördert und dabei gereinigt. Am hinteren Ende des Rübenroders gelangen sie in einen Elevator 26, der die Zuckerrüben oberhalb eines Trichters 27 abwirft. Innerhalb des Trichters transportiert eine hier nicht dargestellte Förderschnecke die Zuckerrüben in den Bunker 24. Der Bunker 24 kann um die Drehachse 28 der Förderschnecke verschwenkbar sein, um ein leichteres Be- und Entladen des Bunkers zu ermöglichen. Der Elevator 26 weist ähnlich wie das Förderband 1 Führungsrollen 29 auf, die an einem Hilfsrahmen 5 gelagert sind. Der Hilfsrahmen 5 stützt sich über die Kraftmeßzelle(n) 10 an dein Grundrahmen 9 des Rübenroders ab. Die Ausgangssignale 12 der Kraftmeßzelle(n) 10 gelangen zu der Auswerteeinrichtung 11 ebenso wie das Ausgangssignal 13 des an eine Führungsrolle 29 angekoppelten Wegaufnehmers 14. Analog zu den Ausführungen zu Figur 1 kann auch hier die Auswerteeinrichtung 11 den zeitbezogenen Durchsatz an Zuckerrüben bestimmen, die von dem Elevator 26 in den Bunker 24 gefördert werden. Wenn die Auswerteeinrichtung 11 gleichzeitig eine GPS-Empfänger aufweist, kann sie dem aktuellen Durchsatz die aktuelle Position der Vorrichtung gemäß Figur 4 zuordnen, wodurch eine lokale Ertragskontrolle beiin Rübenroden möglich ist.

Ein Vorteil der Heranziehung des Elevators 26 für die Durchsatzbestimmung bei der Vorrichtung gemäß Figur 4 ist auch darin zu sehen, daß sich der Elevator 26 relativ weit oberhalb des Bodens 25 befindet und somit nicht so leicht irgendwelchen Störeinflüssen durch Hindernisse am Boden 25 ausgesetzt ist. Im übrigen befindet er sich auch am Ende der Reinigungsstrecke für die mit der Vorrichtung gemäß Figur 4 gerodeten Rüben.

Bei den durch die Kraftmeßzellen 10 abgestützten Fördermitteln 1 und 26 gemäß den Figuren 1, 2 und 4 ist es wichtig, daß nur vertikale Kräfte auf die Kraftmeßzelle(n) einwirken, damit diese tatsächlich nur die zusätzliche Gewichtskraft der auf den Fördermitteln aufliegenden Wurzelfrüchte registrieren. Hierzu kann es sinnvoll sein, für die Fördermittel bzw. deren Hilfsrahmen 5 Führungen vorzusehen, wie sie in den Figuren 5 und 6 skizziert sind. Gemäß Figur 5 besteht die Führung in einem grundrahmenseitigen Druckzylinder 30 und einen hilfsrahmenseitigen Kolben 31. Der Kolben 31 wird spielfrei in dem Zylinder 30 geführt und wirkt auf ein Hydraulikmedium 32 am Grund des Druckzylinders 30 ein. Der Druck in dem Hydraulikmedium 32 wird von der hier als Druckaufnehmer ausgebildeten Kraftmeßzelle 10 registriert.

Gemäß Figur 6 besteht die Führung zwischen dem Grundrahmen 9 und dem Hilfsrahmen 5 aus Parallelogrammlenkern 33 und 34, wobei zumindest 2 Parallelogrammlenker 33 und 34 jeweils hintereinander angeordnet sind. Die Parallelogrammlenker 33 und 34 ergeben zwar keine exakt vertikale Führung des Hilfsrahmens 5 gegenüber dem Grundrahmen 9. Es ist jedoch zu bedenken, daß die Kraftmeßzelle 10 bei bekannter Ausbildung als Kraftmeßbolzen auch bei größeren Kräften nur geringe Meßwege zurücklegt. Über diese Meßwege hinweg kann die Parallelogrammführung des Hilfsrahmens 5 an dem Grundrahmen 9 als rein vertikale Führung angesehen werden.

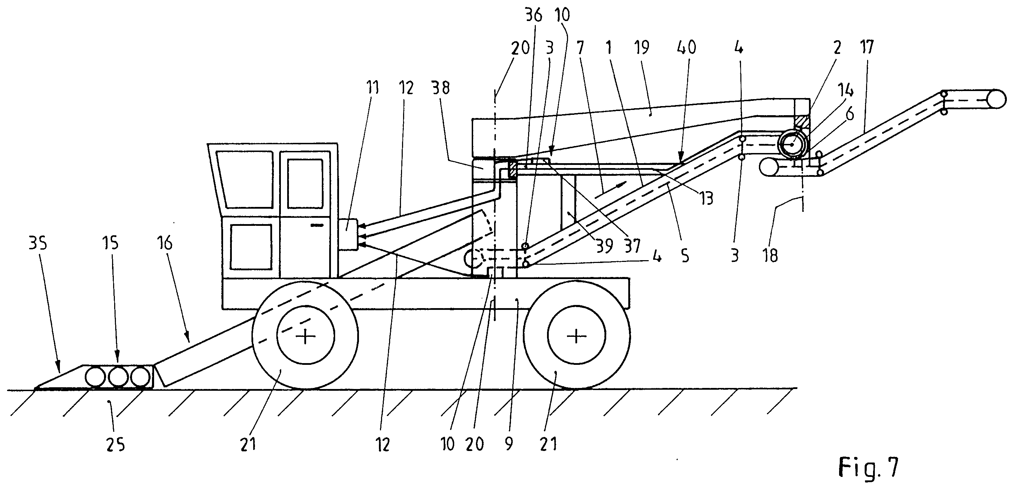

Die in Figur 7 dargestellte Vorrichtung zum Aufnehmen von Zuckerrüben kommt ohne eine Führung gemäß den Figuren 5 und 6 für den Hilfsrahmen 5 des Förderbands 1 an dem Grundrahmen 9 aus. Die Vorrichtung gemäß Figur 7 ist eine Abwandlung der Vorrichtung gemäß Figur 2 und weist gegenüber dieser die folgenden Unterschiede auf. Zur Abstützung des Förderbands 1 an dem Grundrahmen 9 ist ein Biegebalken 36 vorgesehen, der über einen eigenen Drehkranz 38 um die vordere Achse 20 verschwenkbar gelagert ist. Der Hilfsrahmen 5 des Förderbands 1 ist an dem freien Ende 40 des Biegebalkens 36 und über einen Vertikalträger 39 an dem Biegebalken 36 befestigt. Eine anderweitige vertikale Abstützung erfährt das Förderband 5 nicht. So sind das freie Ende des Tragarms 19 und das Förderband 1 in vertikaler Richtung entkoppelt und es ist keine vertikale Abstützung des Förderbands 1 im Bereich der vorderen Achse 20 gegeben. Der Biegebalken 36 bildet zusammen mit einem auf ihm angeordneten Dehnmeßstreifen 37 eine Kraftmeßzelle 10. Das von dem Dehnmeßstreifen 37 kommende Ausgangssignal 12 berücksichtigt die auf dem Förderband 1 aufliegenden Wurzelfrüchte nicht gleichgewichtet. Dies ist aber aufgrund der Mittelung über den Förderweg des Förderbands 1 unerheblich. Umgekehrt ist es sogar ein Vorteil, daß die von den Längsförderschnecken 16 auf das Förderband 1 herabfallenden Wurzelfrüchte bei der in Figur 7 dargestellten Anordnung die Verbiegung des Biegebalkens 36 und damit das Ausgangssignal 12 des Dehnmeßstreifens 37 nicht nennenswert beeinflussen. Der Antrieb 6 und der Wegaufnehmer 14 sind gemäß Figur 7 am hinteren Ende des Förderbands 1 angeordnet, sie wirken jeweils zwischen dem Hilfsrahmen 5 und dem Förderband 1. In Figur 7 ist nur ein Biegebalken 36 mit einem Dehnmeßstreifen 37 dargestellt. Typischerweise ist aber beiderseits des Förderbands 1 jeweils ein Biegebalken 36 angeordnet.

### BEZUGSZEICHENLISTE

- 1: - Förderband
- 2: - Rolle
- 3: - Rolle
- 4: - Rolle
- 5: - Hilfsrahmen
- 6: - Antrieb
- 7: - Pfeil
- 8: - Zuckerrübe
- 9: - Grundrahmen
- 10: - Kraftmeßzelle
- 11: - Auswerteeinrichtung
- 12: - Ausgangssignal
- 13: - Ausgangssignal
- 14: - Wegaufnehmer
- 15: - Querförderschnecken
- 16: - Längsförderschnecken
- 17: - Förderband
- 18: - Achse
- 19: - Tragarm
- 20: - Achse
- 21: - Fahrwerk
- 22: - Achse
- 23: - Hinterachse
- 24: - Bunker
- 25: - Boden
- 26: - Elevator
- 27: - Trichter
- 28: - Achse
- 29: - Führungsrolle
- 30: - Druckzylinder
- 31: - Kolben
- 32: - Hydraulikmedium
- 33: - Parallelogrammlenker
- 34: - Parallelogrammlenker
- 35: - Aufnahmeeinrichtung
- 36: - Biegebalken
- 37: - Dehnmeßstreifen
- 38: - Drehkranz
- 39: - Vertikalträger
- 40: - freies Ende

## Patentansprüche

1. Vorrichtung zum Aufnehmen und Fördern von Wurzelfrüchten mit einem verfahrbaren Grundrahmen und mit mindestens einem Fördermittel, das die aufgenommenen Wurzelfrüchte aufliegend fördert, **dadurch gekennzeichnet**, daß das Fördermittel (1, 26) einen Hilfsrahmen (5) aufweist, der sich über über eine oder mehrere Kraftmeßzelle (10) an dem Grundrahmen (9) abstützt, daß ein Wegaufnehmer (14) den Förderweg des Fördermittels (1, 26) registriert und daß eine Auswerteeinrichtung (11) aus Ausgangssignalen (12 und 13) der Kraftmeßzelle(n) und des Wegaufnehmers (14) den Durchsatz an den aufgenommenen Wurzelfrüchten bestimmt.

2. Vorrichtung nach Anspruch 1, **dadurch gekennzeichnet**, daß für den Hilfsrahmen (5) eine Führung (30 und 31, 33 und 34) an dem Grundrahmen (9) vorgesehen ist, die horizontal wirkende Kräfte aufnimmt und daß die Meßrichtung der Kraftmeßzelle(n) (10) vertikal ausgerichtet ist.

3. Vorrichtung nach Anspruch 1, **dadurch gekennzeichnet**, daß der Hilfsrahmen (5) an dem Grundrahmen (9) um ein horizontale Achse (22) schwenkbar gelagert ist und sich mit seinem freien Ende über die Kraftmeßzelle(n) (10) an dem Grundrahmen (9) abstützt.

4. Vorrichtung nach Anspruch 1 oder 2, **dadurch gekennzeichnet**, daß die Kraftmeßzelle(n) (10) einen oder mehrere Biegebalken (36) aufweisen, über die sich der Hilfsrahmen (5) an dem Grundrahmen (9) abstützt.

5. Vorrichtung nach einem der Ansprüche 1 bis 4, **dadurch gekennzeichnet**, daß das Fördermittel ein Förderband (1), insbesondere ein Siebband, ein Elevator (26), ein Schnecken(steil)förderer oder ein Siebstern ist.

6. Vorrichtung nach einem der Ansprüche 1 bis 5, **dadurch gekennzeichnet**, daß das Fördermittel (1, 26) am Ende einer Reinigungsstrecke angeordnet ist.

7. Vorrichtung nach einem der Ansprüche 1 bis 6, **dadurch gekennzeichnet**, daß das Fördermittel (1, 26) mit Abstand über einer Aufstandfläche des Grundrahmen (9) angeordnet ist.

8. Vorrichtung nach einem der Ansprüche 1 bis 7, **dadurch gekennzeichnet**, daß die Auswerteeinrichtung (11) kalibrierbar ist.

9. Vorrichtung nach einem der Ansprüche 1 bis 8, **dadurch gekennzeichnet**, daß die Auswerteeinrichtung (11) den Durchsatz auf einen Maximalwert begrenzt.

10. Vorrichtung nach einem der Ansprüche 1 bis 8, **dadurch gekennzeichnet**, daß die Auswerteeinrichtung (11) dem aktuellen Durchsatz die aktuelle Position der Vorrichtung zuordnet.
